# EUROPÄISCHE PATENTSCHRIFT

(11) **EP 0 676 042 B1**
(45) Veröffentlichungstag und Bekanntmachung des Hinweises auf die Patenterteilung: **01.10.1997**
(21) Anmeldenummer: 94902621.5
(22) Anmeldetag: 21.12.1993
(51) Int. Cl.: G01L 9/00

(54) **DRUCKMESSUMFORMER**
PRESSURE MEASUREMENT TRANSDUCER
TRANSDUCTEUR DE MESURE DE PRESSION

(30) Priorität: 23.12.1992 DE 4244459
(43) Veröffentlichungstag der Anmeldung: 11.10.1995
(73) Patentinhaber: SIEMENS AKTIENGESELLSCHAFT, 80333 München (DE)
(72) Erfinder: KRISCH, Burkhard, D-12307 Berlin (DE); RIEDEL, Werner, D-13467 Berlin (DE)
(86) Internationale Anmeldenummer: DE9301238
(87) Internationale Veröffentlichungsnummer: WO9415189

(56) Entgegenhaltungen:
- EP-A- 0 126 989
- WO-A-91/04475
- "Regelungstechnische Praxis rtp", 1982, Heft 7, Seiten 223-229

## Beschreibung

Die Erfindung bezieht sich auf einen Druckmeßumformer mit einem scheibenförmigen Drucksensor-Baustein, der im Randbereich einer Seite mit einem Druckzuführungskörper verschweißt ist, mit einem kappenartigen Bauteil, das den Drucksensor-Baustein außen umgibt und mit seinem Boden über der von dem Druckzuführungskörper abgewandten Seite des Drucksensors-Bausteines liegt, wobei durch den Boden elektrische Anschlußdrähte isoliert geführt sind, und mit einem Druckeinleitungsteil, das über eine Trennmembran mit einer von dem Drucksensor-Baustein fernen Seite des Druckzuführungskörpers verbunden ist.

Ein Druckmeßumformer dieser Art ist in der DE- 30 47 276 Al beschrieben. Zwar ist in dieser Druckschrift der dort behandelte Meßumformer als Differenzdruck-Meßumformer bezeichnet, jedoch stellt er einen Druckmeßumformer dar, wenn als Bezugsdruck der Atmosphärendruck verwendet wird. Bei dem bekannten Druckmeßumformer ist der scheibenförmige Drucksensor-Baustein individuell für den Druckmeßumformer hergestellt, indem in einem ersten Fertigungsschritt ein halbleitendes Drucksensor-Element auf einem Sensor-Tragkörper befestigt ist. Der Sensor-Tragkörper ist in einem scheibenförmigen Dichtungsteil durch Schweißen gehalten. Das Dichtungsteil trägt ferner ein Keramiksubstrat, das das Drucksensor-Element umgibt und mit Anschlußdrähten versehen ist, die mit elektrischen Anschlüssen des Drucksensor-Elementes verbunden sind. Durch eine keramische Schutzabdeckung ist der Aufbau aus Drucksensor-Element und Keramiksubstrat geschützt. Außerdem ist in der von dem Drucksensor-Element abgewandten Seite des Dichtungsteils eine Metall-Scheibe eingeschweißt, mit der ein niederdruckseitiger Anschluß des Sensor-Tragkörpers nach außen hin abgeschlossen ist. Der so aufgebaute Drucksensor-Baustein des bekannten Druckmeßumformers ist an einen Druckzuführungskörper am Rande eingeschweißt, der mit einer Durchgangsbohrung für die hochdruckseitige Druckbeaufschlagung und mit einer weiteren Durchgangsbohrung für die niederdruckseitige Druckbeaufschlagung des Drucksensor-Bausteines versehen ist. Der Druckzuführungskörper enthält ferner einen Meßumformer-Mittenteil mit einer Ausgleichsmembran und ist über eine Trennmembran mit einem Druckeinleitungsteil verbunden.

Der Erfindung liegt die Aufgabe zugrunde, einen Druckmeßumformer anzugeben, der sich fertigungstechnisch einfach und damit kostengünstig herstellen läßt.

Zur Lösung dieser Aufgabe ist bei einem Druckmeßumformer der eingangs angegebenen Art erfindungsgemäß der Drucksensor-Baustein ein serienmäßiger Drucksensor mit einem in der Halbleiter-Bauelemente-Herstellung üblichen Sockel mit den elektrischen Anschlußdrähten und einem niederdruckseitigen Anschlußröhrchen; der serienmäßige Drucksensor liegt mit seinem Sockel über eine Zwischenfüllung aus Gießharz an dem Boden des kappenartigen Teils an, der einzelne Öffnungen für die Anschlußdrähte und das niederdruckseitige Anschlußröhrchen aufweist, und das kappenartige Bauteil ist mit dem Druckeinleitungsteil verschweißt.

Ein wesentlicher Vorteil des erfindungsgemäßen Druckmeßumformers besteht darin, daß er mit einem serienmäßigen Drucksensor ausgerüstet ist. Derartige Drucksensoren sind nämlich verhältnismäßig kostengünstig. Serienmäßige Drucksensoren sind jedoch wegen ihrer relativ geringen mechanischen Stabilität nicht ohne weiteres überall einsetzbar; es wird vielmehr von den Herstellern empfohlen, zur Erzielung einer ausreichenden mechanischen Stabilität den Sockel mit einer Stahlplatte zu unterstützten (vgl. Siemens-Datenbuch 1990/91 "Silizium Temperatur- und Drucksensoren", Seite 98). Dieser Anforderung wird bei dem erfindungsgemäßen Druckmeßumformer dadurch in fertigungstechnisch einfacher Weise genügt, daß der serienmäßige Drucksensor über eine Zwischenfüllung aus Gießharz an dem durch die einzelnen Öffnungen für die Anschlußdrähte und das Anschlußröhrchen nur unwesentlich geschwächten Boden des kappenartigen Bauteils anliegt. Dadurch ist gewährleistet, daß das kappenartige Bauteil eine ausreichende mechanische Abstützung bildet, wobei durch das Gießharz eine gleichmäßige Druckbelastung auf den serienmäßigen Drucksensor sichergestellt wird. Der serienmäßige Drucksensor ist also bei dem erfindungsgemäßen Druckmeßumformer gewissermaßen schwimmend gelagert, was durch die Verschweißung des kappenartigen Bauteils mit dem Druckeinleitungsteil ermöglicht ist.

Es ist zwar bekannt ("Regelungstechnische Praxis rtp", 24. Jahrgang, 1982, Heft 7, Seiten 223 bis 229, insbesondere Seite 229), zwischen einem Druckaufnehmer-Chip und einem Gehäuseboden weich-elastisches Material, wie beispielsweise Silikonkautschuk, vorzusehen, jedoch dient hier das weich-elastische Material zum Verkleben des Chip mit dem Boden eines T08-Gehäuses, um einen Drucksensor mit einem T08-Gehäuse herzustellen.

Ferner ist ein Halbleiter-Druckaufnehmer bekannt (DE 42 03 832 Al), bei dem ein auf einem Sockel angeordneter Druckaufnehmerchip über Silikongummi auf einer Chipkontaktfläche befestigt ist. Auch hier dient der Silikongummi im Rahmen der Herstellung eines Drucksensors als Chipbondmaterial.

Zur Erläuterung der Erfindung ist in
- Figur 1: ein Ausführungsbeispiel eines erfindungsgemäßen Druckmeßumformers mit seinen im Zusammenhang mit der Erfindung wesentlichen Teilen im Schnitt und in
- Figur 2: eine Einzelheit aus der Figur 1 gedreht um 120° um die Längsachse im Schnitt dargestellt.

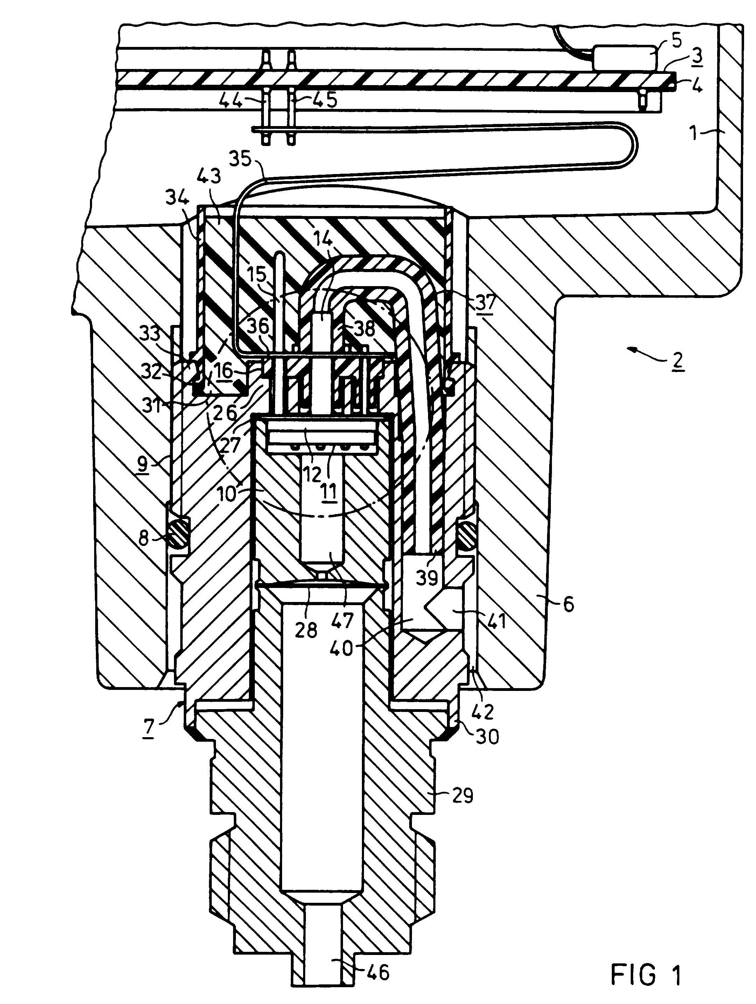

Wie Figur 1 zeigt, ist in einem in ihr nur teilweise wiedergegebenen Gehäuse 1 eines Druckmeßumformers 2 eine elektronische Schaltungsanordnung 3 untergebracht, die eine Leiterplatte 4 mit in der Figur aus Gründen der besseren Übersichtlichkeit halber nur teilweise dargestellten elektronischen Bauelementen 5 enthält.

Das Gehäuse 1 weist auf seiner in der Figur 1 unteren Seite einen Aufnahmestutzen 6 auf, in den ein Einsatz 7 unter Zwischenlegung eines Dichtungsringes 8 eingeschraubt ist. Der Einsatz 7 weist in seinem in der Figur 1 oberen Bereich ein kappenartiges Bauteil 9 auf, in dem sich ein Druckzuführungskörper 10 befindet, an dem wiederum ein serienmäßiger Drucksensor 11 befestigt ist.

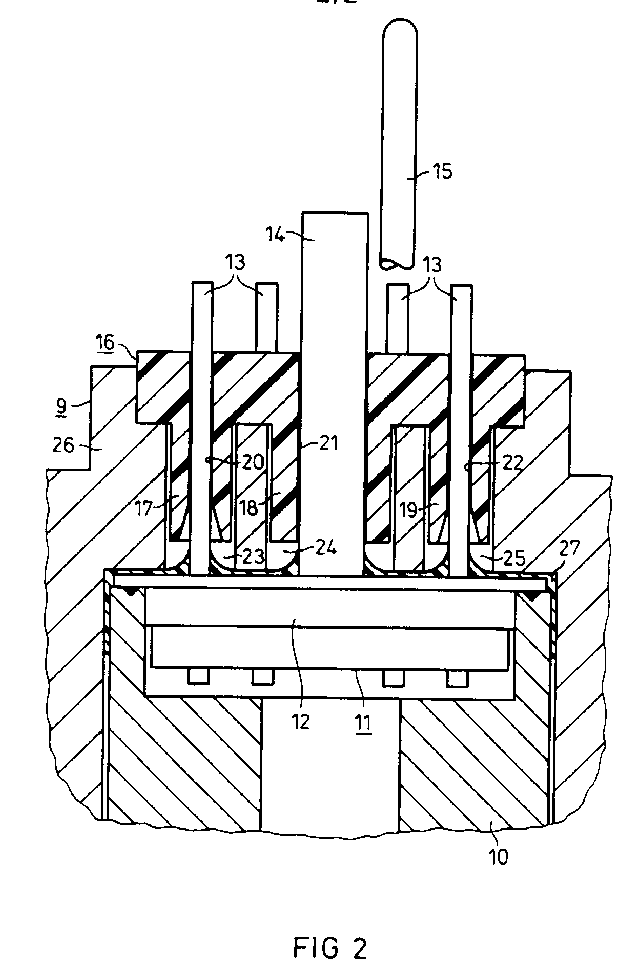

Bei dem serienmäßigen Drucksensor 11 kann es sich beispielsweise um einen Silizium-Drucksensor handeln, wie er in dem oben bereits erwähnten Siemens-Datenbuch 1990/91 "Siliziumtemperatur- und Drucksensoren", Seite 98 beschrieben ist. Der serienmäßige Drucksensor-Baustein 11 ist mit einem in der Halbleiter-Bauelemente-Herstellung üblichen Sockel 12 versehen und am äußeren Rande dieses Sockels 12 durch Schweißen mit dem Druckzuführungskörper 10 verbunden (vgl. auch Figur 2).

Der serienmäßige Drucksensor 11 ist beispielsweise mit einem sog. T08-Sockel versehen und weist Anschlußdrähte 13 in einer räumlichen Anordnung auf, wie sie bei derartigen Sockeln üblich ist. Aus dem Sockel 12 des serienmäßigen Drucksensors 11 ist auch ein niederdruckseitiges Anschlußröhrchen 14 herausgeführt, sowie ein Öleinfüllröhrchen 15. Um sämtliche Anschlußelemente des serienmäßigen Drucksensors 11 isoliert zu führen, ist eine Isolierbuchse 16 vorgesehen, die mit Ansätzen 17, 18 und 19 versehen ist. Diese Ansätze 17 bis 19 weisen Durchgangsöffnungen 20 bis 22 auf, in denen die Anschlußelemente geführt sind. Die Ansätze 17 bis 19 der Isolierbuchse 16 ragen in einzelne Öffnungen 23 bis 25 in einem Boden 26 des kappenartigen Bauteils 9 hinein. Durch das Vorsehen der einzelnen Öffnungen 23 bis 25 ist eine Schwächung des Bodens 26 des kappenartigen Bauteils 9 verhindert. Der Boden dient nämlich zur Abstützung des serienmäßigen Drucksensors 11, da dieser in Richtung auf die Niederdruckseite hin abgestützt montiert werden muß. Um dabei eine gleichmäßige Druckverteilung zu erreichen, ist der Raum zwischen dem Sockel 12 des serienmäßigen Drucksensors 11 und der angrenzenden Seite des Bodens 26 mit Gießharz 27 ausgefüllt.

Wie die Figur 1 ferner zeigt, ist das Druckzuführungskörper 10 über eine Trennmembran 28 mit einem Druckeinleitungsteil 29 verschweißt, so daß bei der Herstellung des Druckmeßumformers in einem Zwischenstadium der serienmäßige Drucksensor 11 mit dem Druckzuführungskörper 10, der Trennmembran 28 und dem Druckeinleitungsteil 29 den zusammenhängenden Einsatz 7 bildet, der beim Einbringen in das kappenartige Bauteil 9 unter Zwischenfügung des Gießharzes 27 mit dem in der Figur 1 unteren Ende 30 des kappenartigen Bauteils 9 verschweißt wird. In diesem Zustand wird das Gießharz 27 unter Wärmeeinwirkung ausgehärtet.

Der serienmäßige Drucksensor 11 ist somit gewissermaßen schwimmend am Boden 26 des kappenartigen Bauteils 9 gehalten.

Wie die Figur 1 auch erkennen läßt, ist das kappenartige Bauteil 9 an seinem in der Figur 1 oberen Ende mit einer ringförmigen Ausdrehung 31 versehen, die eine seitliche Aushöhlung 32 aufweist. Diese Aushöhlung 32 dient gemeinsam mit dem oberen Rand 33 des kappenartigen Bauteils 9 zur Halterung eines Rohres 34 aus flexiblem Material, das von oben her durch Aufschnappen mit dem kappenartigen Bauteil 9 verbunden wird. Bevor dies geschieht, ist ein flexibles Leiterband 35 mit seinem Ende 36 auf die in der Figur 1 obere Seite der Isolierbuchse 16 aufgelegt, und es sind die auf dem flexiblen Leiterband 35 vorhandenen Leiterbahnen mit den Anschlußdrähten 13 galvanisch verbunden.

Figur 1 läßt ferner erkennen, daß auf das niederdruckseitige Anschlußröhrchen 14 des serienmäßigen Drucksensors 11 ein Isolierschlauch 37 mit seinem einen Ende 38 aufgeschoben ist. Das andere Ende 39 des Isolierschlauches 37 ist in eine Bohrung 40 des kappenartigen Bauteils 9 eingeführt, das über eine seitliche Öffnung 41 und einen Ausgangskanal 42 nach außen führt. Nach Ölbefüllung des serienmäßigen Drucksensors 11 über das Öleinfüllröhrchen 15 und nach dessen Verschließen wird von oben eine Vergußmasse 43 in das Rohr 34 aus flexiblem Material eingebracht und ausgehärtet.

Das flexible Leiterband 35 ist - wie Figur 1 ferner zeigt - an elektrische Anschlußelemente 44 und 45 auf der Leiterplatte 4 im Gehäuse 1 geführt.

Bei dem Druckmeßumformer wird über eine Öffnung 46 im Druckeinleitungsteil 29 der zu messende Druck über die Trennmembran 28 und einen Innenkanal 47 im Druckzuführungskörper 10 dem serienmäßigen Drucksensor 11 zugeführt, der daraufhin in bekannter Weise seine elektrischen Eigenschaften verändert, was über das flexible Leiterband 35 zur Auswertung zu der Schaltungsanordnung im Gehäuse 1 übertragen wird.

## Patentansprüche

1. Druckmeßumformer mit einem scheibenförmigen Drucksensor-Baustein (11) der im Randbereich einer Seite mit einem Druckzuführungskörper (10) verschweißt ist,
mit einem kappenartigen Bauteil (9), das den Drucksensor-Baustein (11) außen umgibt und mit seinem Boden über der von dem Druckzuführungskörper abgewandten Seite des Drucksensor-Bausteines liegt, wobei durch den Boden elektrische Anschlußdrähte (13) isoliert durchgeführt sind, und mit einem Druckeinleitungsteil (29), das über eine Trennmembran mit der von dem Drucksensor-Baustein (11) fernen Seite des Druckzuführungskörpers (10) verbunden ist,
**dadurch gekennzeichnet**,
daß der Drucksensor-Baustein ein serienmäßiger Drucksensor (11) mit einem in der Halbleiter-Bauelemente-Herstellung üblichen Sockel (12) mit den elektrischen Anschlußdrähten (13) und einem niederdruckseitigen Anschlußröhrchen (14) ist,
daß der serienmäßige Drucksensor (11) mit seinem Sockel (12) über eine Zwischenfüllung (27) aus Gießharz an dem Boden (26) des kappenartigen Bauteils (9) anliegt, der einzelne Öffnungen (23 bis 25) für die Anschlußdrähte (13) und das niederdruckseitige Anschlußröhrchen (14) aufweist, und
das kappenartige Bauteil (9) mit dem Druckeinleitungsteil (29) verschweißt ist.

2. Druckmeßumformer nach Anspruch 1,
**dadurch gekennzeichnet,**
daß durch die Öffnungen (23 bis 25) im Boden (26) eine Isolierbuchse (16) mit Ansätzen (17 bis 19) greift, deren Durchgangsöffnungen (20 bis 22 die Anschlußdrähte (13) und das Anschlußröhrchen (14) aufnehmen.

## Claims

1. Pressure measurement transducer,
having a disc-shaped pressure sensor module (11) which is welded in the peripheral region of one side to a pressure feed body (10),
having a cap-like component (9) which surrounds the pressure sensor module (11) on the outside and whose component base is located above the side of the pressure sensor module that faces away from the pressure feed body, wherein electric connection wires (13) are led through the component base in an insulated manner, and
having a pressure introduction part (29) which is connected by way of a separating diaphragm to the side of the pressure feed body (10) that is remote from the pressure sensor module (11),
**characterised in that**
the pressure sensor module is a standard pressure sensor (11) with a pressure sensor base (12) which is conventional in the manufacture of semiconductor devices, with the electric connection wires (13) and a low-pressure-side connection tube (14),
in that the pressure sensor base (12) of the standard pressure sensor (11) is located adjacent to the component base (26) of the cap-like component (9) by way of an intermediate filling (27) made of casting resin, the said component base having individual openings (23 to 25) for the connection wires (13) and the low-pressure-side connection tube (14), and the cap-like component (9) is welded to the pressure introduction part (29).

2. Pressure measurement transducer according to claim 1,
**characterised in that**
an insulating bush (16) penetrates the openings (23 to 25) in the component base (26) by means of projections (17 to 19), the through openings (20 to 22) of the said insulating bush receiving the connection wires (13) and the connection tube (14).

## Revendications

1. Transducteur de mesure de la pression comportant
un module (11) de capteur de pression en forme de disque, qui est soudé dans la zone du bord d'un côté à un corps (10) d'alimentation en pression,
un module (9) en forme de capuchon, qui entoure à l'extérieur le module (11) de capteur de pression et qui se trouve par son fond au-dessus du côté du module de capteur de pression qui est éloigné du corps d'alimentation en pression, des fils (13) métalliques électriques de raccordement passant d'une manière isolée dans le fond, et comportant
une pièce (29) d'application de la pression, qui est reliée par l'intermédiaire d'une membrane de séparation au côté du corps (10) d'alimentation en pression, qui est éloigné du module (11) de capteur de pression,
**caractérisé en ce que**
le module de capteur de pression est un capteur (11) de pression de série comportant un socle (12) usuel dans la fabrication des modules à semiconducteur, comportant les fils (13) métalliques de raccordement électrique et un tube (14) de raccordement du côté basse pression,
le capteur (11) de pression de série s'applique par son socle (12) par l'intermédiaire d'une charge intermédiaire (27) en résine de coulée au fond (26) du module (9) en forme de capuchon, qui comporte diverses ouvertures (23 à 25) pour les fils (13) métalliques de raccordement, et le tube (14) de raccordement du côté basse pression, et
le module (9) en forme de capuchon est soudé à la pièce (29) d'application de la pression.

2. Transducteur de mesure de la pression suivant la revendication 1,
caractérisé en ce que
une douille isolante (16) comportant des prolongements (17 à 19), dont les ouvertures de passage (20 à 22) reçoivent les fils métalliques (13) de raccordement et le tube (14) de raccordement, s'engage par les ouvertures (23 à 25) dans le fond (26).
